# EUROPEAN PATENT SPECIFICATION

(11) **EP 4 291 944 B1**
(45) Date of publication and mention of the grant of the patent: **30.10.2024**
(21) Application number: 22721436.8
(22) Date of filing: 22.04.2022
(51) Int. Cl.: G02C 7/04

(54) **LENS SETS FOR USE IN PREVENTING OR SLOWING THE DEVELOPMENT OR PROGRESSION OF MYOPIA AND RELATED METHODS**
LINSENSÄTZE ZUR VERWENDUNG BEI DER VORBEUGUNG ODER VERLANGSAMUNG DER ENTWICKLUNG ODER DES FORTSCHREITENS VON MYOPIE UND ZUGEHÖRIGE VERFAHREN
JEUX DE LENTILLES DESTINÉS À ÊTRE UTILISÉS DANS LA PRÉVENTION OU LE RALENTISSEMENT DU DÉVELOPPEMENT OU DE LA PROGRESSION DE LA MYOPIE ET PROCÉDÉS ASSOCIÉS

(30) Priority: 29.04.2021 US 202163181249 P
(43) Date of publication of application: 20.12.2023
(73) Proprietor: CooperVision International Limited, Fareham PO15 5RL (GB)
(72) Inventor: ARUMUGAM, Baskar, Pleasanton, California 94588 (US); CHAMBERLAIN, Paul, Pleasanton, California 94588 (US); BRADLEY, Arthur, Pleasanton, California 94588 (US); WEBBER, Martin, Eastleigh Hampshire SO53 4LY (GB)
(74) Representative: Abel & Imray LLP
(86) International application number: PCT/GB2022/051024
(87) International publication number: WO 2022/229608

(56) References cited:
- WO-A1-2012/012826
- WO-A1-2021/056057
- WO-A1-2021/056058
- WO-A1-2021/056059

## Description

The present disclosure concerns a kit of contact lenses for use in preventing or slowing the development or progression of myopia. The present disclosure also concerns methods of manufacturing lenses for use in such a kit.

### Background

Myopia (short-sightedness) affects a significant number of people including children and adults. Myopic eyes focus incoming light from distant objects to a location in front of the retina. Consequently, the light converges towards a plane in front of the retina and diverges towards, and is out of focus upon arrival at, the retina. Conventional lenses (e.g. spectacle lenses and contact lenses) for correcting myopia reduce the convergence (for contact lenses), or cause divergence (for spectacle lenses) of incoming light from distant objects before it reaches the eye, so that the location of the focus is shifted onto the retina.

It was suggested several decades ago that progression of myopia in children or young people could be slowed or prevented by under-correcting, i.e. moving the focus towards but not quite onto the retina. However, that approach necessarily results in degraded distance vision compared with the vision obtained with a lens that fully corrects for myopia. Moreover, it is now regarded as doubtful that under-correction is effective in controlling developing myopia. A more recent approach is to provide lenses having both regions that provide full correction of distance vision and regions that under-correct, or deliberately induce, myopic defocus. Lenses may also be provided that increase scattering of light in certain regions compared to light passing through the fully correcting region of the lens. It has been suggested that these approaches can prevent or slow down the development or progression of myopia in children or young people, whilst providing good distance vision.

In the case of lenses having a region that provides defocus, the regions that provide full-correction of distance vision are usually referred to as base power regions and the regions that provide under-correction or deliberately induce myopic defocus are usually referred to as add power regions or myopic defocus regions (because the dioptric power is more positive, or less negative, than the power of the distance regions). A surface (typically the anterior surface) of the add power region(s) has a smaller radius of curvature than that of the distance power region(s) and therefore provides a more positive or less negative power to the eye. The add power region(s) are designed to focus incoming parallel light (i.e. light from a distance) within the eye in front of the retina (i.e. closer to the lens), whilst the distance power region(s) are designed to focus light and form an image at the retina (i.e. further away from the lens).

In the case of lenses that increase scattering of light in a certain region, features that increase scattering may be introduced into a lens surface or may be introduced into the material that is used to form the lens. For example, scattering elements may be burned into the lens.

A known type of contact lens that reduces the progression of myopia is a dual-focus contact lens, available under the name of MISIGHT (CooperVision, Inc.). This dual-focus lens is different than bifocal or multifocal contact lenses configured to improve the vision of presbyopes, in that the dual-focus lens is configured with certain optical dimensions to enable a person who is able to accommodate to use the distance correction (i.e., the base power) for viewing both distant objects and near objects. The treatment zones of the dual-focus lens that have the add power also provide a myopically defocused image at both distant and near viewing distances.

Whilst these lenses have been found to be beneficial in preventing or slowing down the development or progression of myopia, annular add power regions can give rise to unwanted visual side effects. Light that is focused by the annular add power regions in front of the retina diverges from the focus to form a defocused annulus at the retina. Wearers of these lenses therefore may see a ring or 'halo' surrounding images that are formed on the retina, particularly for small bright objects such as street lights and car headlights. Also, rather than using the natural accommodation of the eye (i.e. the eye's natural ability to change focal length) to bring nearby objects into focus, in theory, wearers can make use of the additional focus in front of the retina that results from the annular add power region to focus near objects; in other words, wearers can inadvertently use the lenses in the same manner as presbyopia correction lenses are used, which is undesirable for young subjects.

Further lenses have been developed which can be used in the treatment of myopia, and which are designed to eliminate the halo that is observed around focused distance images in the MISIGHT (CooperVision, Inc.) lenses and other similar lenses described above. In these lenses, the annular region is configured such that no single, on-axis image is formed in front of the retina, thereby preventing such an image from being used to avoid the need for the eye to accommodate near targets. Rather, distant point light sources are imaged by the annular region to a ring-shaped focal line at a near add power focal surface, leading to a small spot size of light, without a surrounding 'halo' effect, on the retina at a distance focal surface.

It has been recognised that, over time, the eye may adapt to compensate for myopic defocus or light scattering features provided in a lens. This may reduce the effectiveness of lenses that aim to slow the progression of myopia. The present disclosure seeks to address this, and seeks to provide a set of lenses for use in young subjects that prevent or slow worsening of myopia. The following patent applications represent technical background for the present disclosure: WO2021/056058 A1, WO2021/056059 A1, WO2021/056057 A1 and WO2012/012826 A1.

### Summary

The present disclosure provides, according to a first aspect a kit for use in preventing or slowing the development or progression of myopia according to claim 1.

The present disclosure provides, according to a second aspect, a method of manufacturing a first set of contact lenses and a second set of contact lenses for use in a kit, according to claim 17.

It will of course be appreciated that features described in relation to one aspect of the present disclosure may be incorporated into other aspects of the present disclosure. For example, the method of the disclosure may incorporate features described with reference to the apparatus of the disclosure and vice versa.

### Description of the Drawings

Fig. 1 is a schematic graph showing the decrease in modulation transfer function (MTF) with spatial frequency for an aberration free lens without an add power region, and for a lens comprising an annular add power region;
Fig. 2 is a schematic diagram showing visual fields of the eye divided into quadrants;
Fig. 3(a)-(c) is a schematic diagram showing the effect of parallax between the lens and the lens wearers pupil;
Fig. 4 is a schematic top view of a set of two lenses, each lens having a treatment zone spanning approximately 50% of the area of the annular region, for use in a kit according to an embodiment of the present disclosure;
Fig. 5 is a cross-section view through one of the lenses of Fig. 4;
Fig. 6 is a schematic top view of a set of 7 lenses, each lens having a treatment zone spanning approximately 50° around the annular region, for use in a kit according to an embodiment of the present disclosure;
Fig. 7 is a schematic top view of a set of 2 lenses, each lens having 2 treatment zones, each treatment zone spanning one quadrant of the lens, and each treatment zone having a curvature providing an add power, for use in a kit according to an embodiment of the present disclosure;
Fig. 8 is a schematic cross-section of the optic zone of the first lens of the set of lenses shown in Fig. 7, taken along the line A-A;
Fig. 9 is a schematic cross-section of the optic zone of the first lens of the set of lenses shown in Fig. 7, taken along the line B-B;
Fig. 10 is a schematic top view of a set of 4 lenses, each lens having a treatment zone spanning one quadrant of the lens, and each treatment zone having a curvature providing an add power with an asymmetric power profile, for use in a kit according to an embodiment of the present disclosure;
Figs. 11(a)-(d) are graphs showing the asymmetric power profiles as a function of θ for the annular regions of the four lenses in the set shown in Fig. 10; and
Fig. 12 is a schematic top view of a set of 4 lenses, each lens having a treatment zone spanning one quadrant of the lens, and each treatment zone having features that increase scattering of light passing through the region, for use in a kit according to an embodiment of the present disclosure.

### Detailed Description

The present disclosure provides, according to a first aspect, a kit for use in preventing or slowing the development or progression of myopia: The kit comprises a first set of contact lenses, wherein each lens in the first set of lenses includes an optic zone and a peripheral zone surrounding the optic zone. The peripheral zone of each lens has a varying thickness profile that is configured to control rotation of the lens. The optic zone of each lens comprises a central region, the central region having a first optical axis and a curvature providing a base power; and_an annular region. The annular region circumferentially surrounds the central region, and the annular region comprises a treatment zone has a characteristic that reduces the contrast of an image that is formed by light passing through the central region and the treatment zone compared to an image of an object that would be formed by light passing through only the central region. The treatment zone of each lens comprises at least one of: (i) an add power region having a curvature providing an add power, wherein light from each distant point object is focused by a treatment zone to form a focused arc at a proximal focal surface, the arc being outside of and extending in a direction around a blur circle formed by the light focused by the central region; (ii) a feature that increases scattering of light passing through the treatment zone compared to light passing through only the central region; and (iii) a characteristic that causes diffraction of light passing through the treatment zone; wherein_the treatment zone is rotationally positioned, relative to the peripheral zone thickness profile, at a different angle about the optic axis in each lens in the set of lenses. The kit comprises a second set of contact lenses having the features of the first set of lenses. For each lens in the first set of lenses having a treatment zone that is rotationally positioned, relative to the peripheral zone thickness profile, at a first angle about the optical axis, there is a corresponding lens in the second set of lenses that has a treatment zone that is positioned relative to the peripheral zone thickness profile, at an equal and opposite angle about the first optical axis. The first set of contact lenses are a set of lenses for the left eye of a wearer, and the second set of lenses are a set of lenses for the right eye of the wearer, or vice versa.

As used herein, the term contact lens refers to an ophthalmic lens that can be placed onto the anterior surface of the eye. It will be appreciated that such a contact lens will provide clinically acceptable on-eye movement and not bind to the eye or eyes of a person. The contact lenses may be in the form of a corneal lens (e.g., a lens that rests on the cornea of the eye). The contact lenses may be a soft contact lens, such as a hydrogel contact lens or a silicone hydrogel contact lens.

Contact lenses according to the present disclosure comprises an optic zone. The optic zone encompasses parts of the lens that have optical functionality. The optic zone is configured to be positioned over the pupil of an eye when in use. For contact lenses according to the present disclosure, the optic zone comprises the central region, and the annular region that surrounds the central region and that comprises a treatment zone. In the context of the present disclosure, the annular region is a substantially annular region that surrounds the optic zone. It may have a substantially circular shape or a substantially elliptical shape. It may fully surround the optic zone. It may partially surround the optical zone.

The treatment zone has a characteristic that causes a reduction in contrast of an image that is formed by light passing through the lens, compared to an image that would be formed by light passing through only the central region of the lens. In other words, the treatment zone causes a reduction in contrast of an image formed by light that has passed through the lens, compared to an image that would be formed by light passing through the same lens without a treatment zone. The treatment zone may comprise contrast-reducing features disposed on a surface of the lens. These features may give rise to additional scattering of light compared to light passing through the remainder of the annular region and the central region. The features may cause light to be diffracted differently compared to light passing through the remainder of the annular region and the central region. The treatment zone may have a curvature that refracts light differently to the remainder of the annular region and the central region, and thereby causes a contrast reduction of an image formed by light passing through the lens.

The treatment zone may be a continuous zone. The treatment zone may span less than half of the annular region. The treatment zone may span less than a quarter of the annular region. The annular zone may comprise a plurality of treatment zones. The contrast reduction may vary across the treatment zone of each lens. Each lens in the set of lenses may have the same treatment zone contrast reduction variation. The boundary between any of the treatment zones and the remainder of the annular region may be a sharp boundary, or may be a smooth boundary. There may be a blending zone at the boundary between each treatment zone and the remainder of the annular region. The blending zone may have a characteristic that give rise to contrast reduction of an image that is formed by light passing through the lens, compared to an image that would be formed by light passing through the central region of the lens. The characteristic may vary and may dissipate in its contrast-reducing effect moving from the treatment zone to the annular region. For example, if the treatment zone has a curvature providing an add power, a blending zone between the treatment zone and the remainder of the annular region may have a gradual change in curvature, and may result in a gradual reduction in add power across the region. If the treatment zone comprises features that increase scattering of light, a blending zone between the treatment zone and the remainder of the annular region may include features that increase scattering, but the density of these features may vary across the blending zone.

The contrast reduction of an image of an object that is formed by light passing through the central region and the treatment zone compared to an image of an object that would be formed by light passing through only the central region alone can be quantified using the modulation transfer function (MTF).

Lenses do not perfectly reproduce the contrast of an object in an image of the object formed by the lens. The modulation transfer function (MTF) of a given lens measures the ability of the lens to transfer contrast from an object to an image of the object, at a particular resolution, and can be derived from the Fourier transform of the point or line spread function. The MTF can be measured by using a test object (an object to be imaged) of black and white line pairs. As line spacing of a test object decreases, (i.e. as the black and white line pairs get closer together, i.e. as spatial frequency increases), the line spread functions of the black lines start to overlap and so the difference between the black lines and their background is reduced in the image, and the MTF decreases.

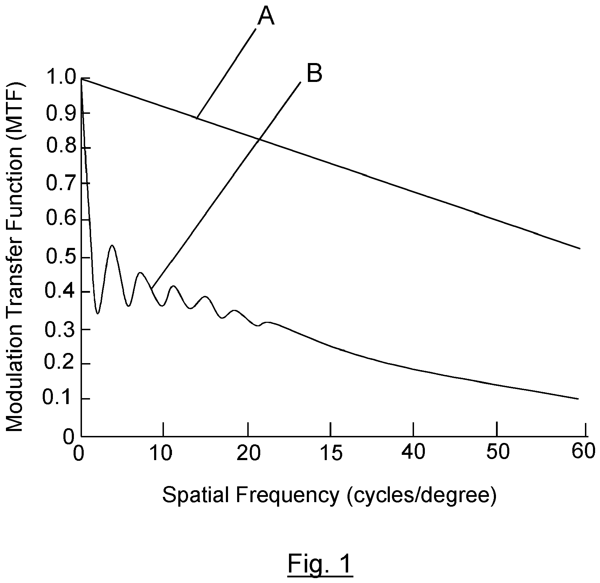

For lenses according to embodiments of the present disclosure, the presence of the treatment zone reduces the MTF (and hence the contrast) of an image formed by light passing through the treatment zone and the central zone, compared to an image that would be formed by light passing through only the central zone. This can be better understood with reference to Fig. 1. As shown by curve A (dashed line), for an aberration free lens without an add power region, the MTF will decrease as a function of spatial frequency. For lenses that have an optic zone including an annular region having an add power, additional modulation is introduced into the MTF, as shown by curve B.

Thus, the additional contrast attenuation may be a result of a treatment zone that comprises an add power. Alternatively, for example, the treatment zone may comprise features that lead to an increase in light scattering.

For lenses according to embodiments of the present disclosure, the contrast attenuation caused by the treatment zone may give rise to a reduction of contrast for an image formed by light that has passed through the treatment zone and the central zone, compared to an image that would be formed by light that has passed through only the central zone.

The optic zone is surrounded by a peripheral zone. An edge zone may surround the peripheral zone. The peripheral zone is not part of the optic zone, but sits outside the optic zone and above the iris when the lens is worn, and it provides mechanical functions, for example, increasing the size of the lens thereby making the lens easier to handle, providing ballasting to prevent rotation of the lens, and/or providing a shaped region that improves comfort for the lens wearer. The peripheral zone may extend to the edge of the contact lens.

Contact lenses according to embodiments of the present disclosure have a peripheral zone thickness variation that is configured to control the rotation of the lens. Each lens in the set of lenses may have the same peripheral zone thickness profile. The variation in thickness of the peripheral zone may be configured to stabilise the lens in a particular orientation. The variation in thickness may be a continually varying thickness around the peripheral zone. The thickness of the peripheral zone may increase towards the bottom of the lens (considering the lens in its normal orientation, when worn by a wearer). The variation in thickness may result from a curvature of the anterior surface of the peripheral zone. The variation in thickness may result from a curvature of the posterior surface of the peripheral zone. The variation in thickness may result from a combination of curvatures of the posterior and anterior surfaces of the peripheral zone. The variation in thickness of thickness of the peripheral zone may be configured to promote rotation of the lens in a particular direction.

The thickness of various regions of the peripheral zone can be selected using routine methods known to persons of ordinary skill in the art. Thicknesses and configurations can be selected to achieve any desired amount of contact lens rotation on the eye without significantly decreasing contact lens comfort or lens awareness. For example, in the design of the peripheral zone, a contact lens can be manufactured with a particular target design and thickness and clinically tested on an eye of a person. The amount of lens rotation can be observed by an eye care practitioner using a slit lamp or other conventional tool. Typically, multiple contact lenses with different thickness profiles will be manufactured and tested on-eye of many people (e.g., 20 or more) to assess lens rotation and lens comfort. If the lens rotation is too little or too great, or if lens comfort is significantly reduced compared to a control lens, then a lens with a different thickness profile in the peripheral zone is manufactured and tested.

The lens includes a stabilisation feature or features. For example, the lens may include a periballast, a prism ballast, or a dynamic stabilisation feature (such as two thin zones provided along a vertical meridian separating the superior and inferior halves). The peripheral zone may include a ballast to orient the lens when positioned on the eye of a wearer. The ballast may be a prism ballast. When placed on the eye of a wearer, the lens may rotate, under the action of the wearer's eyelid, and as a result of gravitational forces, to a pre-determined angle of repose. The ballast may be a wedge and the rotation may result from a rotational force imparted by the wearer's eyelids on the wedge. A prism ballast may be provided on the front surface of the lens. A contact lens with a prism ballast may have a uniform thickness extending in horizontal bands across the peripheral zone, where the horizontal bands progress from a lower thickness in the superior portion of the lens, and progressively increase to a greater relative thickness in the inferior portion of the lens before tapering to a thinner thickness closer to the inferior edge of the contact lens. As a frame of reference, a horizontal band would be parallel to a horizontal line passing through the centre of the contact lens when viewed in plan view and when the superior portion of the lens is located at the top of the view. In other words, the horizontal bands are parallel to the 0 degree/180 degree meridian of the contact lens, as understood by a person of ordinary skill in the art. If a contact lens includes a dynamic stabilisation feature, the contact lens may have a superior and inferior portion in the peripheral zone that is relatively thinner than the thickness of the peripheral zone along the 0 degree/180 degree meridian of the contact lens. As an example, the stabilisation feature may have a thickness from 50 to 100 micrometers in the superior region of the peripheral zone, and the thickness may progressively increase towards the 0 degree/180 degree meridian. If the stabilisation feature has dual thin zones, the region of maximum thickness may be in proximity of the 0 degree/180 degree meridian, and may range from 250 micrometers to 450 micrometers. If the stabilisation feature is a prism ballast, the thickness in the peripheral zone may continue to increase to a maximum thickness in the inferior portion of the peripheral zone, and the maximum thickness may be between about 250 micrometers and 450 micrometers. The rotation may also be assisted by gravitational forces acting on the lens. Each lens in the set of lenses may have the same peripheral zone thickness variation, or each lens in the set of lenses may have a peripheral zone thickness variation that causes the same or a similar effect when the lens is worn by a wearer. For example, each lens in the set of lenses may have a peripheral zone thickness variation that results in the lens rotating to be in the same orientation about the first optical axis when the lens is worn by the wearer.

The contact lens may be substantially circular in shape and have a diameter from about 4 mm to about 20 mm, preferably between about 13.0 mm and 15.0 mm. As used herein a reference to a diameter is a reference to a chord diameter. The centre thickness of the lens may between about 50 micrometres and about 300 micrometres. The peripheral zone of the lens may have a thickness of between about 50 micrometres and about 450 micrometres. The thickness of the lens can be measured using conventional techniques and instruments such as a Rehder gauge. The optic zone may be substantially circular in shape and may have a diameter from about 2 mm to about 10 mm. In some embodiments, the contact lens has a diameter from 13 mm to 15 mm, and the optic zone has a diameter from 7 mm to 9 mm.

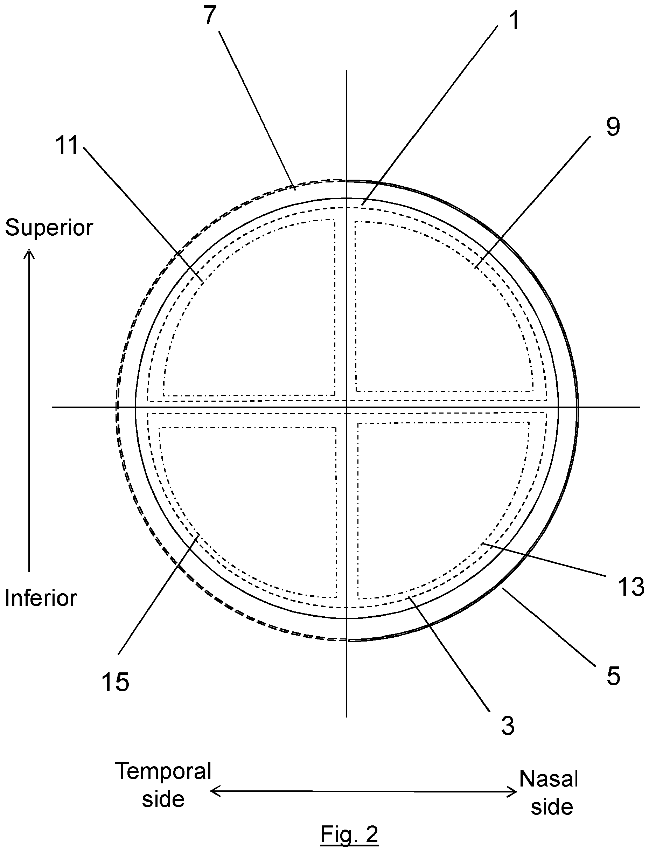

The visual fields of the eye can be divided into quadrants, as shown in Fig. 2, and these quadrants can also be used to describe the quadrants of a contact lens when positioned on an eye. The upper half of the eye/lens is the superior half 1, and the lower half is the inferior half 3. The visual field that is closest to the nose is the nasal half 5, and the visual field that is furthest from the nose is the temporal half 7. Four quadrants can therefore be defined as superior-nasal 9, superior-temporal 11, inferior-nasal 13 and inferior-temporal 15. In the description below, these definitions will be used to describe the position of the add power region and the variation in thickness of the peripheral region as they would be when the lens is in normal use and is being worn by a wearer.

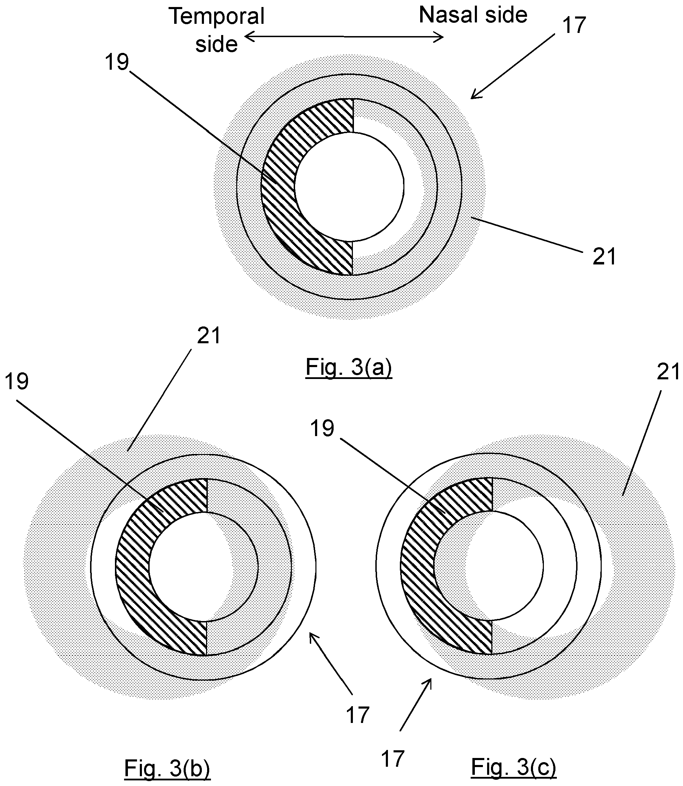

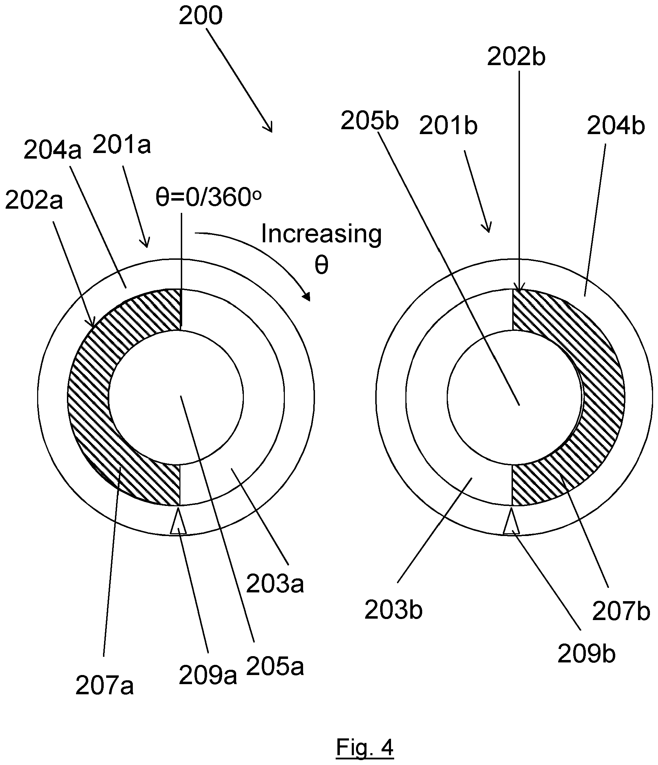

For off-axis light that falls incident on lenses according to embodiments of the present disclosure, there is an approximate mapping of light each quadrant of the lens wearer's visual field to the opposite quadrant of the retina. Axial separation between the lens when positioned on the anterior surface of the cornea and the position of the wearer's pupil results in parallax., shifting the relative position of the lens and the pupil as viewing angle changes, or as the direction of light incident on the lens changes. This is shown, by way of example, in Figs. 3(a)-(c), which shows a lens 17 according to an embodiment of the present disclosure, having a treatment zone 19 that spans approximately half of the annular region (the temporal half). The iris 21 is shown schematically as it would be viewed through the cornea. As shown in Fig. 4(b), the contrast-reducing characteristic of the treatment zone 19 will impact light that is being imaged from the wearer's right visual field, but, as shown in Fig. 4(c), the contrast-reducing characteristic of the treatment zone 19 will not impact light that is being imaged from the wearer's left visual field. Light from the wearer's left visual field that has passed through the treatment zone 19 will be blocked by the iris 21. For this lens 17, the treatment zone 19 will significantly reduce image contrast for the left retina (nasal retina of the right eye, temporal retina of the left eye), but not for the right retina (temporal retina of the right eye, nasal retina of the left eye). It will be apparent that if the treatment zone spanned the nasal half of the lens instead of the temporal half, the lens would significantly reduce image contrast for the right (temporal) retina, but not for the left (nasal) retina. By including the treatment zone 17 in an annular region of the lens, contrast attenuation can be targeted at a peripheral retinal region whilst minimally disrupting foveal vision.

For each lens in a set of lenses, the variation in thickness of the peripheral zone may be symmetric about a lens diameter, wherein the lens diameter divides the annular region into two halves, and wherein the treatment zone is confined to one half of the annular region. The variation in thickness may be substantially confined to lie along a lens diameter. The variation in thickness of the peripheral zone may be used to control the position of the treatment zone relative to the wearer's retina when the lens is worn by a wearer.

The variation in thickness of the peripheral zone may comprise a ballast, and the ballast may control the rotation of the lens. When the lens is in use, the lens may rotate such that the ballast is at or towards the bottom of the lens, i.e. in the inferior half. The lens may rotate such that the ballast is symmetric about the line dividing the temporal and nasal halves of the lens.

The lens diameter may lie along the line separating the nasal and temporal halves of the lens.

For each lens in a set of lenses, the treatment zone contrast reduction variation is rotationally positioned, relative to the peripheral zone thickness profile, at a different angle about the optic axis in each lens in the set of lenses. For example, each lens in the set of lenses may have a treatment zone that spans approximately 25% of the area of the annular region. A first lens in the set of lenses may have a treatment zone that spans the inferior-temporal quadrant of the lens, a second lens in the set of lenses may have a treatment zone that spans the superior-temporal quadrant of the lens, a third lens in the set of lenses may have a treatment zone that spans the superior-nasal quadrant of the lens, and a fourth lens in the set of lenses may have a treatment zone that spans the inferior-nasal quadrant of the lens.

Each set of lenses may comprise 2 lenses, for example, which may be intended to be worn on consecutive days. The set of lenses may comprise 7 lenses, for example, which may be intended to be worn on consecutive days of the week.

As each lens in the set of lenses has a treatment zone that is rotationally positioned, relative to the peripheral zone thickness profile, at a different angle about the optic axis, when each lens in the set of lenses is worn by a wearer the treatment zone will target a different region of the retina. Therefore, wearing each lens in the set of lenses in succession may reduce the ability of the eye to compensate for the contrast reducing effects of the treatment zone.

The first optic axis of the centre region may lie along the centreline of the lens. The central region may focus light from a distant point object, on the first optical axis, to a spot on the first optical axis at a distal focal surface. The term surface, as used herein, does not refer to a physical surface, but to a surface that could be drawn through points where light from distant objects would be focused. Such a surface is also referred to as an image plane (even though it can be a curved surface) or image shell. The eye focuses light onto the retina, which is curved, and in a perfectly focused eye, the curvature of the image shell would match the curvature of the retina. Therefore, the eye does not focus light onto a flat mathematical plane. However, in the art, the curved surface of the retina is commonly referred to locally as a plane.

In embodiments, the treatment zone may be provided over a continuous portion of the annular region of each lens. The treatment zone may span less than 50% of the area of the annular region of each lens. The treatment zone may span less than 25% of the annular region of each lens. The treatment zone may span less than 10% of the annular region of each lens. In embodiments, a plurality of unconnected treatment zones may span the annular region of each lens.

In embodiments wherein each lens includes a plurality of unconnected treatment zones, the total area spanned by the unconnected treatment zones of each lens may be less than 50% of the area of the annular region. The total area spanned by the unconnected treatment zones of each lens may be less than 25% of the area of the annular region. The total area spanned by the unconnected treatment zones of each lens may be less than 10% of the area of the annular region. Each unconnected treatment zone may span between 5% and 10% of the circumference of the annular region. For each lens, each of the unconnected treatment zones may be approximately equal in area. For each lens, the unconnected treatment zones may be spaced at regular intervals around the circumference of the annular region, or at irregular intervals around the circumference of the annular region. The unconnected portions may be separated by portions of the annular region that do not substantially reduce the contrast of an image of an object that is formed by light passing through the central region and the treatment zone compared to an image of an object that would be formed by light passing through only the central region. The portions between the treatment zones may have a curvature that provides the base power

The treatment zone of each lens in a set of lenses may comprise a strong contrast reduction region having a characteristic that reduces the contrast of an image that is formed by light passing through the central region and the treatment zone compared to an image of an object that would be formed by light passing through only the central region by 50% or more. The strong contrast reduction region may reduce the contrast of the image formed by the lens by 75% of more. The treatment zone may further comprise a weaker contrast reducing zone that reduces the contrast of an image that is formed by light passing through the central region and the treatment zone compared to an image of an object that would be formed by light passing through only the central region by less than 50%. In embodiments wherein each lens in the set of lenses comprises a plurality of treatment zones, any or all of the treatment zones may be strong contrast reducing zones. Any or all of the treatment zones may be weaker contrasting reducing zones.

The treatment zone of each lens may have a curvature variation that provides an add power.

The anterior surface of the treatment zone may have a smaller radius of curvature than the radius of curvature of the anterior surface of the central region and the remainder of the annular region. The treatment zone may therefore have a greater power than the base power of the central region and the remainder of the annular region. The focal point of the treatment zone may lie on a proximal focal surface, and the focal point for the central region and the remainder of the annular region may lie on a distal focal surface, which is further away from the posterior surface of the lens. The focal point treatment zone and the focal point of the central region may share a common optical axis. For a point source at infinity, light rays focused by the central region and the annular region form a focused image at the distal focal surface. Light rays focused by the central region also produce an unfocused blur spot at the proximal focal surface.

For each lens, at least some of the add power may be provided by curvature that is centred on a centre of curvature that is a first distance from the first optical axis.

Light rays from a distant point source that pass through the treatment zone may be focused away from the first optical axis an add power focal surface. Light rays that pass through the central region may form an on-axis blur circle (or ellipse for toric lenses) at the max add power focal surface. Light rays from a distant point source that pass through the treatment zone may be focused outside the blur circle or ellipse. The central region of the lens has the base power. If the treatment zone comprises an add power region, the net near power of the treatment zone will be is the sum of the base power and the add power. The centre of curvature of the add power region may be a first distance from the first optical axis.

The at least one add power region may be configured to generate a light distribution at a focal plane of the add power region that generally replicates any zonal geometry of the add power region. The focal plane of the add power region is defined by a plane that passes through the point at which light that passes through the add power region is focused. For an add power region that spans a portion of an annulus, a focused arc may be generated at the focal plane of the add power region. The curvature of the treatment portion can be selected so as to position light that is focused at a treatment portion focal plane at a distance of between about 2 micrometres and about 700 micrometres from and normal to the optic axis, preferably between about 20 micrometres and about 300 micrometres.

The treatment zone of the annular region has a width, and a normal to a surface of the treatment zone taken halfway across the width of the treatment zone region may cross a normal, taken at the centre of the central region, at the centre of the curvature of a surface of the central region. The treatment zone may thereby focus light from each distant point object to form a focused arc at a proximal focal surface, the arc being outside of and surrounding the blur circle formed by the light focused by the central region. The surface of the treatment zone may be an anterior surface. The surface of the central zone may be an anterior surface. The surface of the treatment zone may be the surface that has a curvature providing an add power. The surface of the central zone may be the surface that has a curvature providing the base power.

The base power of the lens may be positive, and the treatment zone may have a power that is more positive than the base power. In this case, the max add power focal surface will be closer to the lens than the distal focal surface. An on-axis image will not be formed by light passing through the treatment zone. A wearer of the lens will therefore need to use the natural accommodation of their eye to bring nearby objects into focus. It may be that the light rays focused by the treatment do not intersect with the first optical axis of the contact lens at all, or not until after they have passed the add power focal surface.

The base power of the lens may be negative, and the treatment zone may have a power that is less negative than the power of the base region, or the treatment zone may have a positive power. Considering the lens positioned on the cornea, if the power of the treatment zone is less negative than the base power, an add power focal surface will be more anterior in the eye than the distal focal surface. Considering the lens when it is not positioned on the cornea, if the power of the treatment zone is positive, an add power focal surface will be on the opposite (image) side of the lens than the distal focal surface (which will be a virtual focal surface on the object side of the lens for negative base powers); if the power of the treatment zone is negative (but less negative than the base power), a virtual add power focal surface will be further from the lens than a virtual distal focal surface.

As each lens in a set of lenses has a treatment zone add power that is rotationally positioned, relative to the peripheral zone thickness profile, at a different angle about the optic axis, each lens in the set will target add power towards a different region of the peripheral retina. Therefore, if the lenses are worn by the wearer at different times, add power will be targeted at different regions of the retina at different times. This is beneficial, particularly for hydrogel and silicone hydrogel lenses, as it is believed that over time, the eye may adapt to the blur at the add power focal surface, thereby reducing the effectiveness of an add power treatment zone preventing the worsening of myopia. By wearing different lenses from the set of lenses in succession, and thereby providing add power targeted at different regions of the retina at different times, the lenses may reduce the ability of the eye to compensate for blur over time. When the different lenses in the set are worn, different parts of the retina will be exposed to different amounts of defocus, and this may be more effective in slowing the growth of myopia than wearing a single lens that provides a constant myopic defocus.

In embodiments wherein each lens in a set of lenses has a plurality of treatment zones each of the treatment zones of a given lens may have a curvature providing the same add power, or each of the treatment zones of a given lens may have curvatures that provide different add powers.

The treatment zone of each lens may have an asymmetric power profile. For each lens in a set of lenses, a curvature providing an add power may be a curvature of the anterior surface of the lens. For each lens, a curvature providing an add power may be a curvature of the posterior surface of the lens. For each lens, a curvature providing an add power may be a curvature of the anterior surface and the posterior surface of the lens providing a combined effect.

For lenses used in the treatment of myopia, the base power will be negative or close to zero, and the central region will correct for distance vision. The base power may be between 0.5 diopters (D) and -20.0 diopters. The base power may be from -0.25 D to -20.0 D. Add power is defined as the difference between the base power and the power of the add power meridian. For each lens in the set of lenses, an add power provided by each treatment zone may between +0.5 and +10.0 D, preferably between +2.0 and +3.0 D. For a lens having a positive base power, the power any add power regions will be more positive than the base power and similarly. For a lens having a lens having a negative base power, the power of each of any add power regions may be less negative than the base power, or the power of any add power regions may be a positive power. The net power of the annular region in any add power region will be the sum of the base power and the add power.

The treatment zone of each lens may include a feature that increases scattering of light passing through the treatment zone compared to light passing through only the central region. The feature may be disposed on an anterior surface of the annular region. The treatment zone of each lens may comprise optical elements burned into a surface of the lens, or etched into the surface of the lens. Features that increase scattering of light passing through the treatment zone will reduce the contrast of an image formed from light passing through the treatment zone and the central region, compared to an image that would be formed from light that has only passed through only the central region. When different lenses in the set are worn by the wearer, the high scattering region will target light towards different regions of the retina. This may reduce the ability of the eye to compensate for the reduced contrast caused by the scattering.

The treatment zone may have a curvature providing an add power wherein the centre of curvature is on the first optical axis.

The treatment zone may include a characteristic that causes diffraction of light passing through the treatment zone. The treatment zone may include other characteristics that reduce the contrast of an image formed by light passing through the treatment zone and the central region, compared to an image that would be formed by light passing through only the central region.

The annular region of each lens may have a substantially circular outer circumference. The annular region of each lens may have a substantially elliptical outer circumference. The central region of each lens may be substantially circular in shape and may have a diameter of between about 2 and 7 mm, preferably between 2 and 5 mm. The central region may be substantially elliptical in shape. The base curve may have a radius of curvature of between about 8.0 mm and 9.0 mm. The annular region of each lens may extend radially outwards from a perimeter of the central region by between 0.1 mm and about 4 mm, preferably by between 0.5 and 1.5 mm. The perimeter of the central region of each lens may define a boundary between the central region and the annular region, and the annular region may therefore be adjacent to the central region.

The annular region of each lens may abut the central region. A blending region may be provided between the central region and the annular region. The blending region should not substantially affect the optics provided by the central region and the annular region, and the blending region may have a radial width of 0.05 mm or less, although it may also be as wide as 0.2 mm, or as wide as 0.5 mm in some embodiments.

The annular region may extend radially outwards to abut the peripheral zone. The treatment zone may span the radial width of the annular zone.

Each lens in a set of lenses may include a plurality of concentric annular regions. Each annular region may be an annular region including a treatment zone having the characteristics outlined above.

The central region of each lens has a base power, which in the context of the present disclosure, is defined as the average absolute refractive power of the central region. Any base power meridians will also have the base power. The base power will correspond to the labelled refractive power of the contact lens as provided on the contact lens packaging (though in practice it may not have the same value). Thus, the lens powers given herein are nominal powers. These values may differ from lens power values obtained by direct measurement of the lens, and are reflective of the lens powers that are used to provide a required prescription power when used in ophthalmic treatment.

Each lens may comprise an elastomer material, a silicone elastomer material, a hydrogel material, or a silicone hydrogel material, or mixtures thereof.

As understood in the field of contact lenses, a hydrogel is a material that retains water in an equilibrium state and is free of a silicone-containing chemical. A silicone hydrogel is a hydrogel that includes a silicone-containing chemical. Hydrogel materials and silicone hydrogel materials, as described in the context of the present disclosure, have an equilibrium water content (EWC) of at least 10% to about 90% (wt/wt). In some embodiments, the hydrogel material or silicone hydrogel material has an EWC from about 30% to about 70% (wt/wt). In comparison, a silicone elastomer material, as described in the context of the present disclosure, has a water content from about 0% to less than 10% (wt/wt). Typically, the silicone elastomer materials used with the present methods or apparatus have a water content from 0.1% to 3% (wt/wt). Examples of suitable lens formulations include those having the following United States Adopted Names (USANs): methafilcon A, ocufilcon A, ocufilcon B, ocufilcon C, ocufilcon D, omafilcon A, omafilcon B, comfilcon A, enfilcon A, stenfilcon A, fanfilcon A, etafilcon A, senofilcon A, senofilcon B, senofilcon C, narafilcon A, narafilcon B, balafilcon A, samfilcon A, lotrafilcon A, lotrafilcon B, somofilcon A, riofilcon A, delefilcon A, verofilcon A, kalifilcon A, and the like.

Alternatively, each lens may comprise, consist essentially of, or consist of a silicone elastomer material. For example, the lens may comprise, consist essentially of, or consist of a silicone elastomer material having a Shore A hardness from 3 to 50. The shore A hardness can be determined using conventional methods, as understood by persons of ordinary skill in the art (for example, using a method DIN 53505). Other silicone elastomer materials can be obtained from NuSil Technology or Dow Chemical Company, for example.

The kit may comprise packaging for supplying the sets of contact lenses to a user. The kit may comprise written instructions for indicating an ordering sequence for wearing the lenses. Each lens in a set may be individually packaged, for example, in blister packaging. The packaging may, for example, comprise a strip of connected blister packets. Each set of lenses may be a set of two lenses, for use on consecutive days. Each set of lenses may be a set of 7 lenses, for use on consecutive days of each week. The instructions may instruct the wearer to wear a different lens every day, or after a certain number of hours or days. The written instructions may be provided on the packaging or on the lenses. Each lens in the first set of lenses has a treatment zone that is rotationally positioned, relative to the peripheral zone thickness profile, at a first angle about the first optical axis. For each lens in the first set of lenses, there is a corresponding lens in the second set of lenses that has a treatment zone that is positioned relative to the peripheral zone thickness profile, at an equal and opposite angle about the first optical axis. The first set of lenses is a set of lenses for the left eye of a wearer, and the second set of lenses is a set of lenses for the right eye of a wearer, or vice versa.

According to a second aspect, the present disclosure provides a method of manufacturing a first set of contact lens and a second set of contact lenses for use in a kit. The method comprises, in step (a) forming a first contact lens for a first set of contact lenses. The lens includes an optic zone and a peripheral zone surrounding the optic zone, the peripheral zone of each lens having a varying thickness profile that is configured to control rotation of the lens. The optic zone of each lens comprises_a central region, the central region having a first optical axis and a curvature providing a base power. The optic zone of each lens comprises an annular region. The annular region circumferentially surrounds the central region. The annular region comprises a treatment zone having a characteristic that reduces the contrast of an image that is formed by light passing through the central region and the treatment zone compared to an image of an object that would be formed by light passing through only the central region. The treatment zone of each lens comprising at least one of_(i) an add power region having a curvature providing an add power, wherein light from each distant point object is focused by a treatment zone to form a focused arc at a proximal focal surface, the arc being outside of and extending in a direction around a blur circle formed by the light focused by the central region; (ii) a feature that increases scattering of light passing through the treatment zone compared to light passing through only the central region; and_(iii) a characteristic that causes diffraction of light passing through the treatment zone. The method comprises, in step (b), repeating step (a) to form a second contact lens in the first set, wherein the treatment zone is rotationally positioned, relative to the peripheral zone thickness profile, at a different angle about the optic axis in the first lens and the second lens. The method comprises, in step (c), repeating steps (a) and (b) to form a second set of contact lenses. The second set of contact lenses has the features of the first set of lenses. For each lens in the first set of lenses having a treatment zone that is rotationally positioned, relative to the peripheral zone thickness profile, at a first angle about the optical axis, there is a corresponding lens in the second set of lenses that has a treatment zone that is positioned relative to the peripheral zone thickness profile, at an equal and opposite angle about the first optical axis. The first set of contact lenses are a set of lenses for the left eye of a wearer, and the second set of lenses are a set of lenses for the right eye of the wearer, or vice versa.

The second lens, and any subsequent lenses may have the same peripheral zone thickness profile as the first lens, and the same treatment zone contrast reduction variation as the first lens.

Each lens in a set of lenses, and each set of lenses may include any of the features set out above.

The method of manufacturing may comprise forming a female mold member with a concave lens forming surface and a male mold member with a convex lens forming surface. The method may comprise filling a gap between the female and male mold members with bulk lens material. The method may further comprise curing the bulk lens material to forms the lens.

The contact lenses may be a formed using a lathing process. The lenses can be formed by cast molding processes, spin cast molding processes, or lathing processes, or a combination thereof. As understood by persons skilled in the art, cast molding refers to the molding of a lens by placing a lens forming material between a female mold member having a concave lens member forming surface, and a male mold member having a convex lens member forming surface.

Fig. 4 shows a set of contact lenses 200 for use in slowing progression of myopia (e.g. myopia control), for use in a kit according to an embodiment of the present disclosure. The set comprises two lenses 201a, 201b. Each lens 201a, 201b comprises an optic zone 202a, 202b, which approximately covers the pupil, and a peripheral zone 204a, 204b that sits over the iris. The peripheral zones 204a, 204b provide mechanical functions, including increasing the size of the lenses 201a, 201b thereby making the lenses 201a, 201b easier to handle, and providing a shaped region that improves comfort for the lens wearer. The peripheral zones 204a, 204b increase in thickness towards the bottom of the lens to provide ballasts 209a, 209b. In the example Figures shown and described herein, the location of the thickest parts of the ballasting are indicated by triangles; however, the skilled person will appreciate that the variation in thickness may be provided by different types of ballasting or other thickness variations (see paragraph [0038] for examples). For each lens 201a, 201b in the set, the variation in thickness of the peripheral zone 204a, 204b is the same. For both lenses 201a, 201b in this set, the ballasts 209a, 209b are positioned at the bottom of the lens (i.e. in the inferior half), along the diameter that separates the temporal and nasal halves of the lenses 201a, 201b. The ballasts 209a, 209b control the rotation of the lenses 201a, 201b, such that when the lenses 201a, 201b are being worn, they remain in a stable position in spite of rotational forces from the wearer blinking. The optic zones 202a, 202b, provide the optical functionality of the lenses 201a, 201b. Each optic zone 202a, 202b comprises an annular region 203a, 203b and a central region 205a, 205b. Each annular region 203a, 203b comprises a treatment zone 207a, 207b that reduces the contrast of an image of an object that is formed by light passing through the central region 205a, 205b and the treatment zone 207a, 207b compared to an image of an object that would be formed by light passing through only the central region 205a, 205b. For the lenses 201a, 201b in this set 200, the first lens 201a has a treatment zone 207a that spans the temporal half of the lens 201a, and the second lens 201b has a treatment zone 201b that spans the nasal half of the lens 201a.

The position around the circumference of the lens can be defined by an angle θ, where θ varies between 0° and 360°, as shown in Fig. 4. For the two lenses 201a, 201b in this set, the treatment zones 207a, 207b are rotationally positioned, relative to the ballasts 209a, 209b, at a different angles about the optic axis, with the treatment zone 207a of the first lens 201a spanning approximately 0-180° and the treatment zone 207b of the second lens spanning approximately 180-360°. If a wearer wears the two lenses 201a, 201b on successive days, the treatment zones 207a, 207b will target different regions of the retina at different times. This may reduce the ability of the eye to compensate for the contrast reducing effects of the treatment zone.

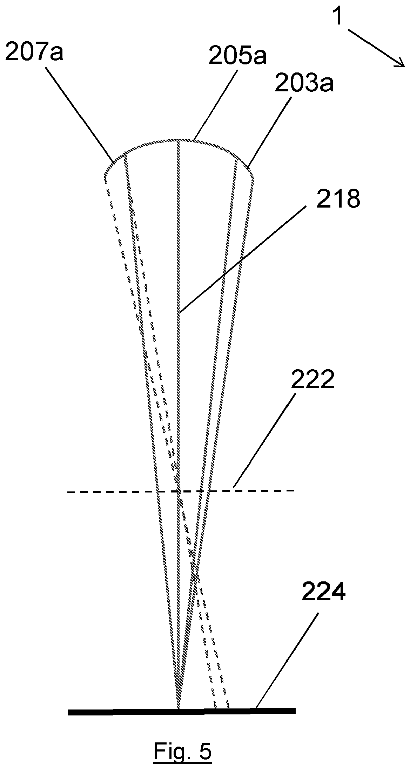

For the lens set of Fig. 4, the treatment zone has a curvature variation that provides an add power. Fig. 5 shows a cross section through the lens 201a of Fig. 4. The anterior surface of the treatment zone 207a has a smaller radius of curvature than the radius of curvature of the anterior surface of the central region 205a and the remainder of the annular region 203a. The treatment zone 207a therefore has a greater power than the base power of the central region 205a and the remainder of the annular region 203a. The focal point of the treatment zone 207a lies on a proximal focal surface 222 (as indicated by the dashed line), and the focal point for the central region 205a and the remainder of the annular region 203a lies on a distal focal surface 224, which is further away from the posterior surface of the lens 201a. The focal point treatment zone 207a and the focal point of the central region 205a share a common optical axis 218. For a point source at infinity, light rays focused by the central region 205a and the annular region 203a form a focused image at the distal focal surface 224. Light rays focused by the central region 205a also produce an unfocused blur spot at the proximal focal surface 222.

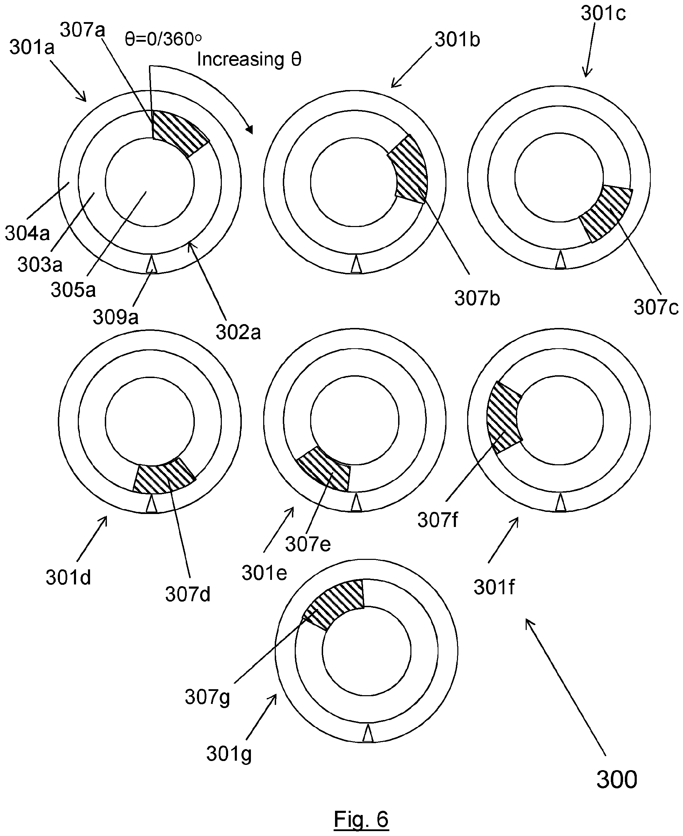

Fig. 6 shows a set of contact lenses 300 for use in slowing progression of myopia (e.g. myopia control), for use in a kit according to an embodiment of the present disclosure. The set comprises seven lenses 301a-g. Similarly to Fig. 4, each lens 301a-g comprises an optic zone 302a-g, which approximately covers the pupil, and a peripheral zone 304a-g that sits over the iris. The peripheral zones 304a-g provide mechanical functions, including increasing the size of the lenses 301a-g thereby making the lenses 301a-g easier to handle, and providing a shaped region that improves comfort for the lens wearer. The peripheral zones 304a-g have a variation in thickness provided by ballasts 309a-g. For each lens 301a-g in the set, the variation in thickness of the peripheral zone is the same. For each of the lenses 301a-g in this set, the ballasts 309a-g are positioned at the bottom of the lens (i.e. in the inferior half), along the diameter that separates the temporal and nasal halves of the lens 301a-g. The ballasts 309a-g control the rotation of the lenses 301a-g, such that when the lenses 301a-g are being worn, they remain in a stable position in spite of rotational forces from the wearer blinking. The optic zones 302a-g, provide the optical functionality of the lenses 301a-g. Each of the optic zones 302a-g comprises an annular region 303a-g and a central region 305a-g. Each annular region 302a-g comprises a treatment zone 307a-g that reduces the contrast of an image of an object that is formed by light passing through the central region 305a-g and the treatment zone 307a-g compared to an image of an object that would be formed by light passing through only the central region 305a-g. Defining the position around the circumference of the lenses 301a-g by an angle θ, where theta varies between 0° and 360°, the first lens 301a has a treatment zone 307a that spans approximately 0-50° around the annular region 303a, and the second lens 301b has a treatment zone 107a that spans approximately 50-100°. Each lens 301a-g in the set has a treatment zone 307a-g that spans a different sector of the annular region 303a-g relative to the ballast 309a-g. If a wearer wears the lenses 301a-g on successive days, the treatment zones 307a-g will target different regions of the retina at different times.

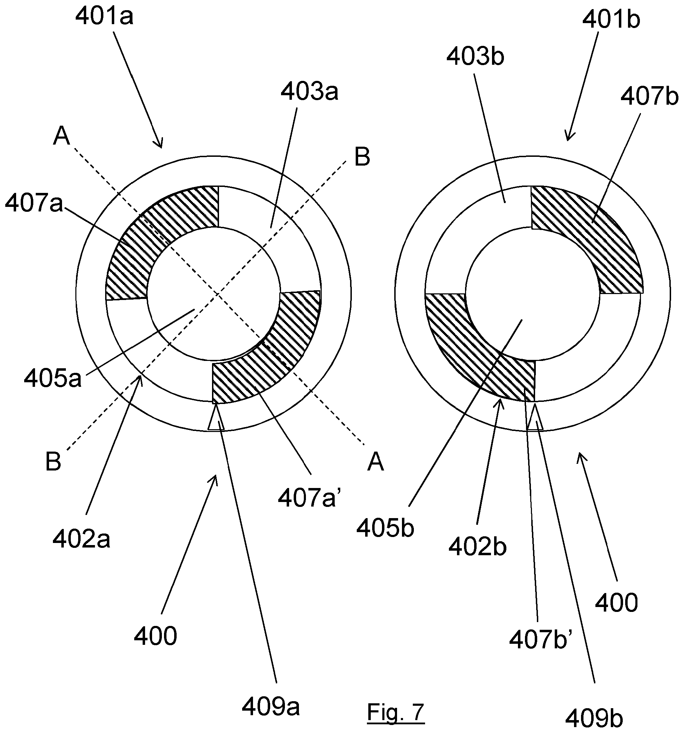

Fig. 7 shows a set of contact lenses 400 for use in slowing progression of myopia (e.g. myopia control), for use in a kit according to an embodiment of the present disclosure. The set comprises two lenses 401a, 401b. Similarly to Fig. 4, each lens 401a, 401b comprises an optic zone 402a, 402b, which approximately covers the pupil, and a peripheral zone 404a, 404b that sits over the iris. The peripheral zones 404a, 404b provide mechanical functions, including increasing the size of the lenses 401, 401b thereby making the lenses 401, 401b easier to handle, and providing a shaped region that improves comfort for the lens wearer. The peripheral zones 404a, 404b have a variation in thickness provided by ballasts 409a, 409b. For each lens 401a, 401b in the set, the variation in thickness of the peripheral zone 404a, 404b is the same. For each of the lenses 401a, 401b in this set, the ballasts 409a, 409b are positioned at the bottom of the lens 401a, 401b (i.e. in the inferior half), along the diameter that separates the temporal and nasal halves of the lens 401a, 401b. The ballasts 409a, 409b control the rotation of the lenses 401a, 401b, such that when the lenses 401a, 401b are being worn, they remain in a stable position in spite of rotational forces from the wearer blinking. The optic zones 402a, 402b, provide the optical functionality of the lenses 401a, 401b. Each of the optic zones 402a, 402b comprises an annular region 403a, 403b and a central region 405a, 405b. Each annular region 403a, 403b comprises two treatment zones 407a, 407b, 407a', 407b' that reduces the contrast of an image of an object that is formed by light passing through the central region 405a, 405b and the treatment zone 407a, 407b, 407a', 407b'compared to an image of an object that would be formed by light passing through only the central region 405a, 405b. Defining the position around the circumference of the lenses 401a, 401b an angle θ, where theta varies between 0° and 360°, the first lens 401a has a first treatment zone 407a that spans the superior-temporal quadrant, or 270-360_{°} around the annular region 403a, and a second treatment zone 407a' that spans the inferior-nasal quadrant, or 90-180° around the annular region 403a. The second lens 401b has a first treatment zone 407b that spans the superior-nasal quadrant, or 0-90° around the annular region 403b and a second treatment zone 407b' that spans the inferior-temporal quadrant, or 180-270° around the annular region 403b.

Each lens 401a, 401b in the set 400 has 2 treatment zones 407a, 407b, 407a', 407b', and the treatment zones of each lens span different segments of the annular region 403a, 403b relative to the ballast 409a, 409b. If a wearer wears the lenses 401a, 401b on successive days, the treatment zones 407a, 407b, 407a', 407b' will target different regions of the retina at different times.

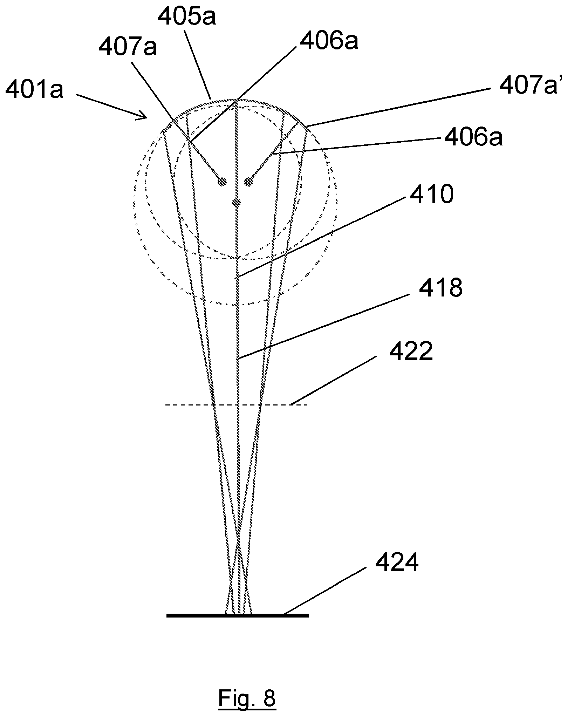

For the lenses 401a, 401b of Fig. 7, each treatment zone 407a, 407b, 407a', 407b' has a curvature that provides an add power. For each lens, the central region 405a, 405b has a curvature providing a base power and centred on a centre of curvature that is on the first optical axis 418. This is shown in Fig. 8 which is a schematic of a cross section through the first lens 407a in the set taken along the line A-A.

Each treatment zone 407a, 407a' has a curvature that provides an add power. The radius of curvature 406a of the anterior surface of the treatment zones 407a, 407a' (indicated by the dashed circles) is smaller than the radius of curvature 410 of the anterior surface of the central region 405a (indicated by the dot-dash circle). The treatment zones 407a, 407a' therefore have a greater power than the base power of the central region 405. Each of the treatment zones 407a, 407a' has the same anterior curvature and the same power. As shown in Fig. 8, the focal point of the treatment zones 407a, 407a' lies on a proximal focal surface 422, and the focal point for the central region 405a lies on a distal focal surface 424, which is further away from the posterior surface of the lens 401a. The focal point 425 of the treatment zones 407a, 407a' and the focal point 424 of the central region 405a share a common optical axis 418. For a point source at infinity, light rays focused by the central region 405a form a focused image at the distal focal surface 424. Light rays focused by the central region 405a also produce an unfocused blur spot at the proximal focal surface 422. Light rays focused by the treatment zones 407a, 407a' form a focused image at the proximal focal surface 422. Light rays 420 focused by the treatment zones 407a, 407a' diverge after the proximal focal surface 422.

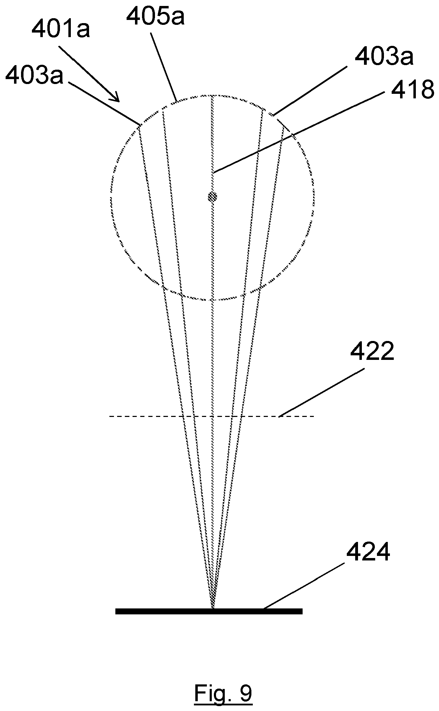

The add power treatment zones 407a, 407a'reduce the contrast of an image of an object that is formed by light passing through the central region and the treatment zone compared to an image of an object that would be formed by light passing through only the central region 405. In between the treatment zones 407a, 407a' there are regions that do not significantly reduce the contrast of an image formed by light passing through the lens 401. For the lens 401a of Fig. 7, these regions have the base power, and as shown in Fig. 9, which shows a cross section through the lens 401a taken along the line B-B, light passing through these regions will be focused at the distal focal surface 424.

The second lens 401b in the set 400 has treatment zones 407b, 407b' spanning opposite quadrants. Therefore if the wearer wears the two lenses 401a, 401a' on successive days, on the first day, the treatment zones 407a, 407a' of the first les 401a will target add power at a first two quadrants (in this case, the inferior-nasal and superior-temporal quadrants) and on the second day, the treatment zones 407b, 407b' of the second lens 401b will target add power at a second, different two quadrants (in this case, the inferior-temporal and superior-nasal quadrants).

In the embodiment shown in Fig. 7, the 2 treatment zones of each lens have the same power. In other embodiments, the 2 treatment zones may have different powers.

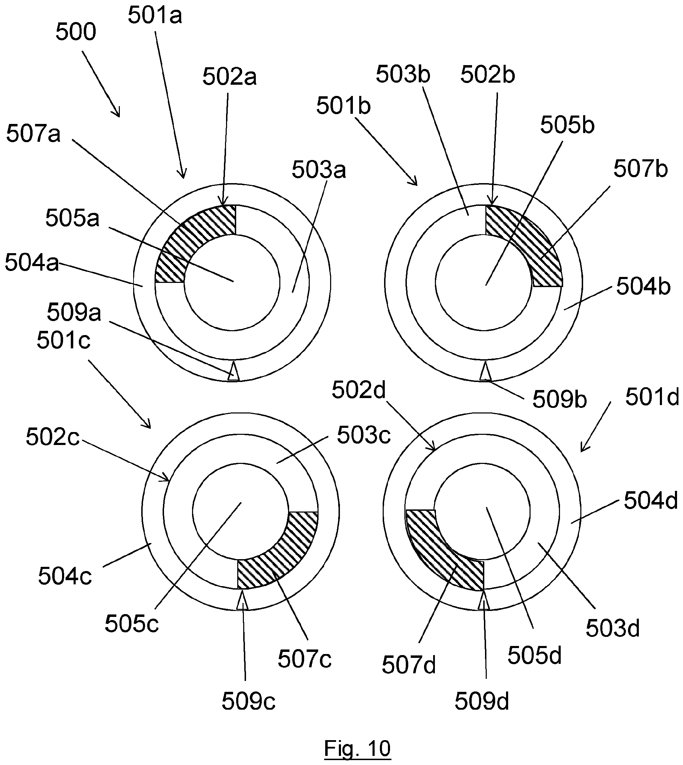

Fig. 10 shows a set of contact lenses 500 for use in slowing progression of myopia (e.g. myopia control), for use in a kit according to an embodiment of the present disclosure. The set 500 comprises four lenses 501a-d. Each lens 501a-d comprises an optic zone 502a-d, which approximately covers the pupil, and a peripheral zone 504a-d that sits over the iris. The peripheral zones 504a-d provide mechanical functions, including increasing the size of the lenses 401a-d thereby making the lenses 501a-d easier to handle, and providing a shaped region that improves comfort for the lens wearer. The peripheral zones 504a-d have a variation in thickness provided by ballasts 509a-d. For each lens 501a-d in the set, the variation in thickness of the peripheral zone 504a-d is the same. For each of the lenses 501a-d in this set, the ballasts 509a-d are positioned at the bottom of the lens 501a-d (i.e. in the inferior half), along the diameter that separates the temporal and nasal halves of the lens 501a-d. The ballasts 509a-d control the rotation of the lenses 501a-d such that when the lenses 501a-d are being worn, they remain in a stable position in spite of rotational forces from the wearer blinking. The optic zones 502a-d, provide the optical functionality of the lenses 501a-d. Each of the optic zones 502a-d comprises an annular region 503a-d and a central region 505a-d. Each annular region 503a-d comprises a treatment zone 507a-d that that reduces the contrast of an image that is formed by light passing through the central region 505a-d and the treatment zone 507a-d compared to an image of an object that would be formed by light passing through only the central region 505a. The contrast reduction varies with meridian around the annular region 503a-d. Defining the position around the circumference of the lenses 501a-d by an angle θ, where θ varies between 0° and 360°, the first lens 501a has a first treatment zone 507a that spans the superior-temporal quadrant, or 270-360_{°} around the annular region 503a, the second lens 501b has a second treatment zone 507b that spans the superior-nasal quadrant or 0-90° around the annular region 503b, the third lens 501c has a treatment zone 507c that spans the inferior-nasal quadrant or 90-180° around the annular region 503c, and the fourth lens 501d has a treatment zone 507d that spans the inferior-temporal quadrant or 180-270° around the annular region.

Each lens 501a-d in the set therefore has treatment zones 507a-d that spans a different segment of the annular region 503a-d relative to the ballast 509a-d. If a wearer wears the lenses 501a-d on successive days, the treatment zones 507a-d will target different regions of the retina.

For the lenses 501a-d of Fig. 10, each treatment zone 507a-d has a curvature that provides an add power. For each lens, the central region 505 has a curvature providing a base power and centred on a centre of curvature that is on the first optical axis.

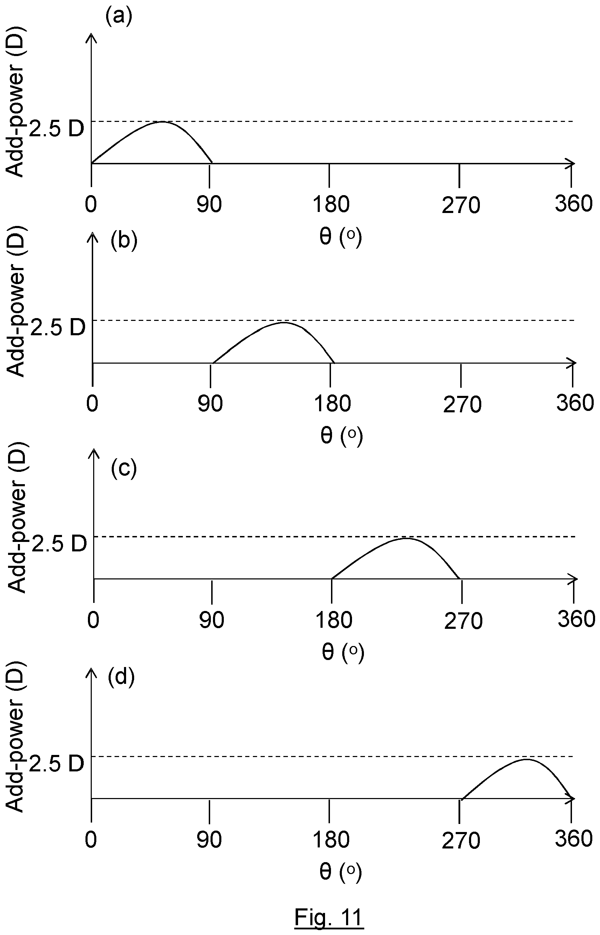

Each treatment zone 507a-d has a curvature that provides an add power. The radius of curvature of the anterior surface of the treatment zones 507a-d is smaller than the radius of curvature of the anterior surface of the central region 505a-d. The treatment zones 507a-d therefore have a greater power than the base power of the central region 505a-d. Each of the treatment zones 507a-d has the same anterior curvature and the same power, and each of the treatment zones has an asymmetric anterior surface curvature, which gives rise to an asymmetric power profile. Examples asymmetric power profiles are shown for each of the lenses in the set 500 in Figure 11(a)-(d). For each lens 501a-d, the treatment zone 507b-d is rotated by 90° around the annular region 503(a)-(d).

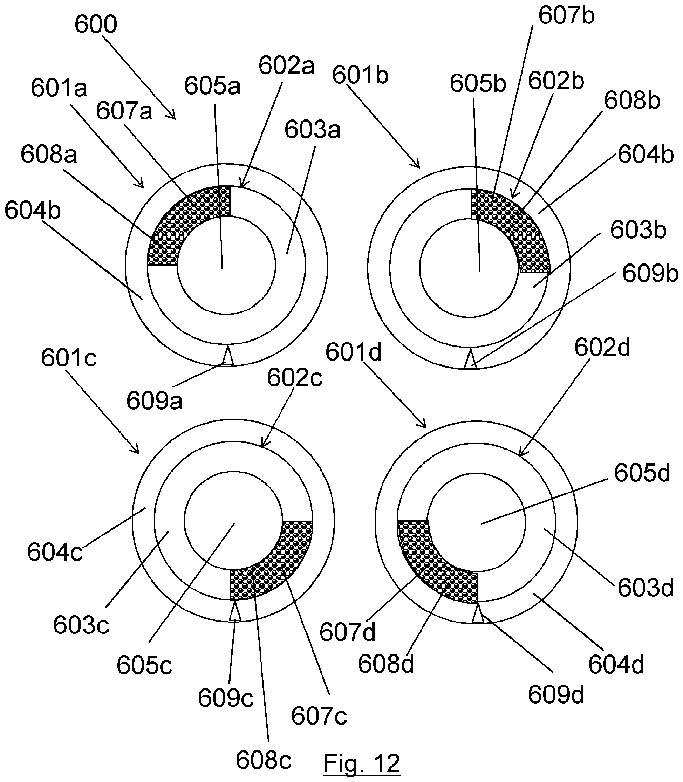

Fig. 12 shows a set of contact lenses 600 for use in slowing progression of myopia (e.g. myopia control), for use in a kit according to an embodiment of the present disclosure. This set 600 is similar to the set of lenses shown in Fig. 10. However, for this set of lenses 601a-d, each of the treatment zones 607a-d comprises features 608a-d that increases scattering of light passing through the treatment zones 607a-d compared to light passing through the remainder of the annular regions 603a-d and the central regions 605a-d. This leads to a reduction in contrast of an image of an object reduces the contrast of an image that is formed by light passing through the central regions 605a-d and the treatment zones 607a-d compared to an image of an object that would be formed by light passing through only the central regions 605a-d. If a wearer wears the lenses 601a-d on successive days, the treatment zones 607a-d will target different regions of the retina, and this may reduce the ability of the eye to compensate for the contrast reducing effects of the treatment zone.

In the embodiment shown in Fig. 12, light scattering features are provided in treatment zones that span a single quadrant of the annular region of each lens. It will be appreciated that such features could be provided in lenses having any other configurations of treatment zones falling within the scope of the claims.

In other embodiments (not shown), each lens in the lens set may be provided with two concentric annular regions, and each annular region may be an annular region including a treatment zone, as described above.

In other embodiments, the treatment zone may comprise a characteristic that reduces contrast of light of an image that is formed by light passing through the central region and the treatment zone compared to an image of an object that would be formed by light passing through only the central region by causing diffraction effects.

Reference should be made to the claims for determining the true scope of the present disclosure. It will also be appreciated by the reader that integers or features of the disclosure that are described as advantageous, convenient or the like are optional, and do not limit the scope of the independent claims. Moreover, it is to be understood that such optional integers or features, whilst of possible benefit in some embodiments of the disclosure, may not be desirable and may therefore be absent in other embodiments.

## Claims

1. A kit for use in preventing or slowing the development or progression of myopia, the kit comprising:
a first set (200) of contact lenses, wherein each lens (201a, 201b) in the first set of lenses (200) includes an optic zone (202a, 202b) and a peripheral zone (204a, 204b) surrounding the optic zone (202a, 202b), the peripheral zone (204a, 204b) of each lens (201a, 201b) having a varying thickness profile that is configured to control rotation of the lens (201a, 201b), and the optic zone (202a, 202b) of each lens (201a, 201b) comprising:
a central region (205a, 205b), the central region (205a, 205b) having a first optical axis and a curvature providing a base power;
an annular region (203a, 203b), wherein the annular region (203a, 203b) circumferentially surrounds the central region (205a, 205b), and wherein the annular region (203a, 203b) comprises a treatment zone (207a, 207b) having a characteristic that reduces the contrast of an image that is formed by light passing through the central region (205a, 205b) and the treatment zone (207a, 207b) compared to an image of an object that would be formed by light passing through only the central region (205a, 205b), the treatment zone (207a, 207b) of each lens (201a, 201b) comprising at least one of:
(a) an add power region having a curvature providing an add power, wherein light from each distant point object is focused by a treatment zone (207a, 207b) to form a focused arc at a proximal focal surface, the arc being outside of and extending in a direction around a blur circle formed by the light focused by the central region (205a, 205b);
(b) a feature that increases scattering of light passing through the treatment zone compared to light passing through only the central region; and
(c) a characteristic that causes diffraction of light passing through the treatment zone; wherein
the treatment zone is rotationally positioned, relative to the peripheral zone thickness profile, at a different angle about the optic axis in each lens in the set of lenses; and
a second set of contact lenses having the features of the first set (200) of lenses (201a, 201b), wherein for each lens (201a, 201b) in the first set (200) of lenses (201a, 201b) having a treatment zone (207a, 207b) that is rotationally positioned, relative to the peripheral zone (204a, 204b) thickness profile, at a first angle about the optical axis, there is a corresponding lens in the second set of lenses that has a treatment zone that is positioned relative to the peripheral zone thickness profile, at an equal and opposite angle about the first optical axis, and wherein the first set (200) of contact lenses are a set of lenses for the left eye of a wearer, and the second set of lenses are a set of lenses for the right eye of the wearer, or vice versa.

2. The kit according to claim 1, wherein the treatment zone of each lens is provided over a continuous portion of the annular region of each lens, and wherein the treatment zone spans less than 50% of the area of the annular region of each lens.

3. The kit according to claim 1 or claim 2, wherein a plurality of unconnected treatment zones span the annular region of each lens.

4. The kit according to any preceding claim, wherein the treatment zone of each lens comprises a strong contrast reduction region that reduces the contrast of an image that is formed by light passing through the central region and the treatment zone compared to an image of an object that would be formed by light passing through only the central region by 50% or more.

5. The kit according to any preceding claim, wherein the treatment zone of each lens has a curvature variation that provides an add power, and wherein, in each lens, at least some of the add power is provided by curvature that is centred on a centre of curvature that is a first distance from the first optical axis.

6. The kit according to claim 5, wherein the treatment zone of each lens has an asymmetric power profile.

7. The kit according to any of claims 5-6, wherein for each lens, the curvature providing the add power may be a curvature of the anterior surface of the lens.

8. The kit according to any of claims 5-7, wherein the add power provided by the treatment zone of each lens is between +0.5 and +10.0 D.

9. The kit according to any preceding claim, wherein the treatment zone of each lens may include a feature that increases scattering of light passing through the treatment zone compared to light passing through only the central region, and wherein the feature is disposed on an anterior surface of the annular region.

10. The kit according to any preceding claim, wherein the annular region of each lens has a substantially circular outer circumference or a substantially elliptical outer circumference.

11. The kit according to any preceding claim, wherein the central region of each lens is substantially circular in shape and has a diameter of between 2 and 7 mm.

12. The kit according to any preceding claim, wherein the annular region of each lens extends radially outwards from a perimeter of the central region by between 0.5 and 1.5 mm.

13. The kit according to any preceding claim, wherein each lens comprises an elastomer material, a silicone elastomer material, a hydrogel material, or a silicone hydrogel material, or mixtures thereof.

14. The kit according to any preceding claim, wherein each lens is formed using a lathing process.

15. The kit according to any preceding claim, wherein the varying thickness profile of each peripheral zone is a prism ballast.

16. The kit according to any preceding claim, further comprising:
packaging for supplying the set of contact lenses to a user, and
written instructions indicating an ordering sequence for wearing the lenses, wherein optionally, the written instructions are provided on the packaging or one the lenses.

17. A method of manufacturing a first set of contact lenses and a second set of contact lenses for use in a kit according to any preceding claim, the method comprising:
(a) forming a first contact lens for a first set of contact lenses, wherein the lens includes an optic zone and a peripheral zone surrounding the optic zone, the peripheral zone of each lens having a varying thickness profile that is configured to control rotation of the lens, and the optic zone of each lens comprising:
a central region, the central region having a first optical axis and a curvature providing a base power;
an annular region, wherein the annular region circumferentially surrounds the central region, and wherein the annular region comprises a treatment zone having a characteristic that reduces the contrast of an image that is formed by light passing through the central region and the treatment zone compared to an image of an object that would be formed by light passing through only the central region, the treatment zone of each lens comprising at least one of:
(i) an add power region having a curvature providing an add power, wherein light from each distant point object is focused by a treatment zone to form a focused arc at a proximal focal surface, the arc being outside of and extending in a direction around a blur circle formed by the light focused by the central region; (ii) a feature that increases scattering of light passing through the treatment zone compared to light passing through only the central region; and
(iii) a characteristic that causes diffraction of light passing through the treatment zone;
(b) repeating step (a) to form a second contact lens in the first set, wherein the treatment zone is rotationally positioned, relative to the peripheral zone thickness profile, at a different angle about the optic axis in the first lens and the second lens; and
(c) repeating steps (a) and (b) to form a second set of contact lenses, second set of contact lenses having the features of the first set of lenses, wherein for each lens in the first set of lenses having a treatment zone that is rotationally positioned, relative to the peripheral zone thickness profile, at a first angle about the optical axis, there is a corresponding lens in the second set of lenses that has a treatment zone that is positioned relative to the peripheral zone thickness profile, at an equal and opposite angle about the first optical axis, and wherein the first set of contact lenses are a set of lenses for the left eye of a wearer, and the second set of lenses are a set of lenses for the right eye of the wearer, or vice versa.

## Patentansprüche

1. Kit zur Verwendung zur Verhinderung oder Verlangsamung der Entwicklung oder des Fortschreitens von Myopie, wobei der Kit Folgendes umfasst:
ein erstes Set (200) von Kontaktlinsen, wobei jede Linse (201a, 201b) im ersten Set von Linsen (200) eine optische Zone (202a, 202b) und eine periphere Zone (204a, 204b) aufweist, die die optische Zone (202a, 202b) umgibt, wobei die periphere Zone (204a, 204b) jeder Linse (201a, 201b) ein variierendes Dickenprofil aufweist, das so konfiguriert ist, dass es die Rotation der Linse (201a, 201b) steuert, und wobei die optische Zone (202a, 202b) jeder Linse (201a, 201b) umfasst:
einen zentralen Bereich (205a, 205b), wobei der zentrale Bereich (205a, 205b) eine erste optische Achse und eine Krümmung aufweist, die eine Basisstärke liefert;
einen ringförmigen Bereich (203a, 203b), wobei der ringförmige Bereich (203a, 203b) den zentralen Bereich (205a, 205b) in Umfangsrichtung umgibt, und wobei der ringförmige Bereich (203a, 203b) eine Behandlungszone (207a, 207b) umfasst, die eine Eigenschaft aufweist, die den Kontrast eines Bildes, das durch Licht gebildet wird, das durch den zentralen Bereich (205a, 205b) und die Behandlungszone (207a, 207b) hindurchgeht, im Vergleich zu einem Bild eines Objekts verringert, das durch Licht gebildet wird, das nur durch den zentralen Bereich (205a, 205b) hindurchgeht, wobei die Behandlungszone (207a, 207b) jeder Linse (201a, 201b) mindestens Folgendes umfasst:
(a) einen Bereich mit Additionswert mit einer Krümmung, die einen Additionswert bereitstellt, wobei Licht von jedem entfernten Punktobjekt durch eine Behandlungszone (207a, 207b) fokussiert wird, um einen fokussierten Bogen an einer proximalen Brennfläche zu bilden, wobei der Bogen außerhalb eines Unschärfekreises liegt und sich in einer Richtung um ihn herum erstreckt, der durch das vom zentralen Bereich (205a, 205b) fokussierte Licht gebildet wird,
(b) ein Merkmal, das die Streuung von Licht, das durch die Behandlungszone hindurchgeht, im Vergleich zu Licht, das nur durch den zentralen Bereich hindurchgeht, erhöht; und
(c) eine Eigenschaft, die eine Diffraktion des Lichts verursacht, das durch die Behandlungszone hindurchgeht; wobei
die Behandlungszone in jeder Linse des Linsensets relativ zum Dickenprofil der peripheren Zone in einem anderen Winkel um die optische Achse drehbar angeordnet ist; und
ein zweites Set von Kontaktlinsen mit den Merkmalen des ersten Sets (200) der Linsen (201a, 201b), wobei für jede Linse (201a, 201b) im ersten Set (200) der Linsen (201a, 201b) mit einer Behandlungszone (207a, 207b), die relativ zum Dickenprofil der peripheren Zone (204a, 204b) in einem ersten Winkel um die optische Achse drehbar angeordnet ist, eine entsprechende Linse im zweiten Linsenset vorhanden ist, die eine Behandlungszone aufweist, die relativ zum Dickenprofil der peripheren Zone in einem gleichen und entgegengesetzten Winkel um die erste optische Achse angeordnet ist, und wobei das erste Set (200) der Kontaktlinsen ein Linsenset für das linke Auge eines Trägers ist, und das zweite Linsenset ein Linsenset für das rechte Auge des Trägers ist, oder umgekehrt.

2. Kit nach Anspruch 1, wobei die Behandlungszone jeder Linse über einen kontinuierlichen Teil des ringförmigen Bereichs jeder Linse vorgesehen ist, und wobei sich die Behandlungszone über weniger als 50 % der Fläche des ringförmigen Bereichs jeder Linse erstreckt.

3. Kit nach Anspruch 1 oder Anspruch 2, wobei sich eine Vielzahl von unverbundenen Behandlungszonen über den ringförmigen Bereich jeder Linse erstrecken.

4. Kit nach einem der vorhergehenden Ansprüche, wobei die Behandlungszone jeder Linse einen Bereich mit starker Kontrastverringerung umfasst, der den Kontrast eines Bildes, das durch Licht gebildet wird, das durch den zentralen Bereich und die Behandlungszone hindurchgeht, im Vergleich zu einem Bild eines Objekts, das durch Licht gebildet würde, das nur durch den zentralen Bereich hindurchgeht, um 50% oder mehr verringert.

5. Kit nach einem der vorhergehenden Ansprüche, wobei die Behandlungszone jeder Linse eine Krümmungsvariation aufweist, die einen Additionswert bereitstellt, und wobei in jeder Linse mindestens ein Teil der Additionsstärke durch eine Krümmung bereitgestellt wird, die auf einen Krümmungsmittelpunkt zentriert ist, der ein erster Abstand von der ersten optischen Achse ist.

6. Kit nach Anspruch 5, wobei die Behandlungszone jeder Linse ein asymmetrisches Stärkeprofil aufweist.

7. Kit nach einem der Ansprüche 5 bis 6, wobei für jede Linse die Krümmung, die den Additionswert bereitstellt, eine Krümmung der vorderen Oberfläche der Linse sein kann.

8. Kit nach einem der Ansprüche 5 bis 7, wobei der von der Behandlungszone jeder Linse bereitgestellte Additionswert zwischen +0,5 und +10,0 D liegt.

9. Kit nach einem der vorhergehenden Ansprüche, wobei die Behandlungszone jeder Linse ein Merkmal aufweisen kann, das die Streuung von Licht, das durch die Behandlungszone hindurchgeht, im Vergleich zu Licht, das nur durch den zentralen Bereich hindurchgeht, erhöht, und wobei das Merkmal auf einer vorderen Oberfläche des ringförmigen Bereichs angeordnet ist.

10. Kit nach einem der vorhergehenden Ansprüche, wobei der ringförmige Bereich j eder Linse einen im Wesentlichen kreisförmigen Außenumfang oder einen im Wesentlichen elliptischen Außenumfang aufweist.

11. Kit nach einem der vorhergehenden Ansprüche, wobei der zentrale Bereich jeder Linse im Wesentlichen kreisförmig ist und einen Durchmesser zwischen 2 und 7 mm hat.

12. Kit nach einem der vorhergehenden Ansprüche, wobei sich der ringförmige Bereich jeder Linse von einem Umfang des zentralen Bereichs radial nach außen um zwischen 0,5 und 1,5 mm erstreckt.

13. Kit nach einem der vorhergehenden Ansprüche, wobei jede Linse ein Elastomermaterial, ein Silikonelastomermaterial, ein Hydrogelmaterial oder ein Silikonhydrogelmaterial oder Mischungen daraus umfasst.

14. Kit nach einem der vorhergehenden Ansprüche, wobei jede Linse durch ein Drehverfahren hergestellt wird.

15. Kit nach einem der vorhergehenden Ansprüche, wobei das variierende Dickenprofil jeder peripheren Zone ein Prismenballast ist.

16. Kit nach einem der vorhergehenden Ansprüche, der außerdem Folgendes umfasst:
Verpackung zum Bereitstellen des Kontaktlinsensets für einen Benutzer, und
schriftliche Anweisungen, die eine Reihenfolge für das Tragen der Linsen angeben, wobei optional die schriftlichen Anweisungen auf der Verpackung oder auf einer der Linsen angebracht sind.

17. Verfahren zur Herstellung eines ersten Kontaktlinsensets und eines zweiten Kontaktlinsensets zur Verwendung in einem Kit nach einem der vorhergehenden Ansprüche, wobei das Verfahren umfasst:
(a) Formen einer ersten Kontaktlinse für ein erstes Kontaktlinsenset, wobei die Linse eine optische Zone und eine periphere Zone, die die optische Zone umgibt, umfasst, wobei die periphere Zone jeder Linse ein variierendes Dickenprofil aufweist, das so konfiguriert ist, dass es die Rotation der Linse steuert, und wobei die optische Zone jeder Linse Folgendes umfasst:
einen zentralen Bereich, wobei der zentrale Bereich eine erste optische Achse und eine Krümmung aufweist, die eine Basisstärke liefert;
einen ringförmigen Bereich, wobei der ringförmige Bereich den zentralen Bereich in Umfangsrichtung umgibt, und wobei der ringförmige Bereich eine Behandlungszone mit einer Eigenschaft umfasst, die den Kontrast eines Bildes, das durch Licht, das durch den zentralen Bereich und die Behandlungszone hindurchgeht, erzeugt wird, im Vergleich zu einem Bild eines Objekts verringert, das durch Licht, das nur durch den zentralen Bereich hindurchgeht, erzeugt würde, wobei die Behandlungszone jeder Linse mindestens eines der folgenden Merkmale umfasst:
(i) einen Bereich mit Additionsstärke mit einer Krümmung, die einen Additionswert bereitstellt, wobei Licht von jedem entfernten Punktobjekt durch eine Behandlungszone fokussiert wird, um einen fokussierten Bogen an einer proximalen Brennfläche zu bilden, wobei der Bogen außerhalb eines Unschärfekreises liegt und sich in einer Richtung um ihn herum erstreckt, der durch das vom zentralen Bereich fokussierte Licht gebildet wird; (ii) ein Merkmal, das die Streuung von Licht, das durch die Behandlungszone hindurchgeht, im Vergleich zu Licht, das nur durch den zentralen Bereich hindurchgeht, erhöht; und
(iii) ein Merkmal, das eine Diffraktion des durch die Behandlungszone hindurchgehenden Lichts bewirkt;
(b) Wiederholen von Schritt (a), um eine zweite Kontaktlinse im ersten Set zu bilden, wobei die Behandlungszone relativ zum Dickenprofil der peripheren Zone in der ersten Linse und der zweiten Linse in einem unterschiedlichen Winkel um die optische Achse drehbar angeordnet ist; und
(c) Wiederholen der Schritte (a) und (b), um ein zweitens Kontaktlinsenset zu bilden, wobei das zweite Kontaktlinsenset die Merkmale des ersten Linsensets aufweist, wobei für jede Linse im ersten Linsenset, die eine Behandlungszone aufweist, die relativ zum Dickenprofil der peripheren Zone in einem ersten Winkel um die optische Achse drehbar angeordnet ist, eine entsprechende Linse im zweiten Linsenset vorhanden ist, die eine Behandlungszone aufweist, die relativ zum Dickenprofil der peripheren Zone in einem gleichen und entgegengesetzten Winkel um die erste optische Achse angeordnet ist, und wobei das erste Kontaktlinsenset ein Linsenset für das linke Auge eines Trägers ist, und das zweite Linsenset ein Linsenset für das rechte Auge des Trägers ist oder umgekehrt.

## Revendications

1. Nécessaire à utiliser pour prévenir ou ralentir le développement ou la progression de la myopie, le nécessaire comprenant :
un premier ensemble (200) de lentilles de contact, dans lequel chaque lentille (201a, 201b) dans le premier ensemble de lentilles (200) inclut une zone optique (202a, 202b) et une zone périphérique (204a, 204b) entourant la zone optique (202a, 202b), la zone périphérique (204a, 204b) de chaque lentille (201a, 201b) ayant un profil d'épaisseur variable qui est configuré pour commander la rotation de la lentille (201a, 201b), et la zone optique (202a, 202b) de chaque lentille (201a, 201b) comprenant :
une région centrale (205a, 205b), la région centrale (205a, 205b) ayant un premier axe optique et une courbure fournissant une puissance de base ;
une région annulaire (203a, 203b), dans lequel la région annulaire (203a, 203b) entoure circonférentiellement la région centrale (205a, 205b), et dans lequel la région annulaire (203a, 203b) comprend une zone de traitement (207a, 207b) ayant une caractéristique qui réduit le contraste d'une image qui est formée par une lumière traversant la région centrale (205a, 205b) et la zone de traitement (207a, 207b) en comparaison à une image d'un objet qui serait formée par une lumière traversant uniquement la région centrale (205a, 205b), la zone de traitement (207a, 207b) de chaque lentille (201a, 201b) comprenant au moins l'un des éléments suivants :
(a) une région de puissance d'addition ayant une courbure fournissant une puissance d'addition, dans lequel une lumière provenant de chaque objet ponctuel distant est focalisée par une zone de traitement (207a, 207b) pour former un arc focalisé au niveau d'une surface focale proximale, l'arc étant à l'extérieur d'un cercle flou formé par la lumière focalisée par la région centrale (205a, 205b) et s'étendant dans une direction autour de ce cercle flou ;
(b) une particularité qui augmente la diffusion d'une lumière traversant la zone de traitement en comparaison à une lumière traversant uniquement la région centrale ; et
(c) une caractéristique qui provoque la diffraction d'une lumière traversant la zone de traitement ; dans lequel
la zone de traitement est positionnée en rotation, par rapport au profil d'épaisseur de zone périphérique, à un angle différent autour de l'axe optique dans chaque lentille dans l'ensemble de lentilles ; et
un second ensemble de lentilles de contact présentant les particularités du premier ensemble (200) de lentilles (201a, 201b), dans lequel pour chaque lentille (201a, 201b) dans le premier ensemble (200) de lentilles (201a, 201b) ayant une zone de traitement (207a, 207b) qui est positionnée en rotation, par rapport au profil d'épaisseur de zone périphérique (204a, 204b), à un premier angle autour de l'axe optique, il y a une lentille correspondante dans le second ensemble de lentilles qui a une zone de traitement qui est positionnée par rapport au profil d'épaisseur de zone périphérique, à un angle égal et opposé autour du premier axe optique, et dans lequel le premier ensemble (200) de lentilles de contact est un ensemble de lentilles pour l'œil gauche d'un porteur, et le second ensemble de lentilles est un ensemble de lentilles pour l'œil droit du porteur, ou vice versa.

2. Nécessaire selon la revendication 1, dans lequel la zone de traitement de chaque lentille est fournie sur une portion continue de la région annulaire de chaque lentille, et dans lequel la zone de traitement couvre moins de 50 % de l'aire de la région annulaire de chaque lentille.

3. Nécessaire selon la revendication 1 ou la revendication 2, dans lequel une pluralité de zones de traitement non reliées couvrent la région annulaire de chaque lentille.

4. Nécessaire selon une quelconque revendication précédente, dans lequel la zone de traitement de chaque lentille comprend une région de forte réduction de contraste qui réduit le contraste d'une image qui est formée par une lumière traversant la région centrale et la zone de traitement en comparaison à une image d'un objet qui serait formée par une lumière traversant uniquement la région centrale de 50 % ou plus.

5. Nécessaire selon une quelconque revendication précédente, dans lequel la zone de traitement de chaque lentille présente une variation de courbure qui fournit une puissance d'addition, et dans lequel, dans chaque lentille, au moins une partie de la puissance d'addition est fournie par une courbure qui est centrée sur un centre de courbure qui est à une première distance du premier axe optique.

6. Nécessaire selon la revendication 5, dans lequel la zone de traitement de chaque lentille a un profil de puissance asymétrique.

7. Nécessaire selon l'une quelconque des revendications 5 et 6, dans lequel pour chaque lentille, la courbure fournissant la puissance d'addition peut être une courbure de la surface antérieure de la lentille.

8. Nécessaire selon l'une quelconque des revendications 5 à 7, dans lequel la puissance d'addition fournie par la zone de traitement de chaque lentille est entre +0,5 et +10,0 D.

9. Nécessaire selon une quelconque revendication précédente, dans lequel la zone de traitement de chaque lentille peut inclure une particularité qui augmente la diffusion d'une lumière traversant la zone de traitement en comparaison à une lumière traversant uniquement la région centrale, et dans lequel la particularité est disposée sur une surface antérieure de la région annulaire.

10. Nécessaire selon une quelconque revendication précédente, dans lequel la région annulaire de chaque lentille a une circonférence externe sensiblement circulaire ou une circonférence externe sensiblement elliptique.

11. Nécessaire selon une quelconque revendication précédente, dans lequel la région centrale de chaque lentille est sensiblement de forme circulaire et a un diamètre entre 2 et 7 mm.

12. Nécessaire selon une quelconque revendication précédente, dans lequel la région annulaire de chaque lentille s'étend radialement vers l'extérieur à partir d'un périmètre de la région centrale entre 0,5 et 1,5 mm.

13. Nécessaire selon une quelconque revendication précédente, dans lequel chaque lentille comprend un matériau élastomère, un matériau élastomère de silicone, un matériau hydrogel, ou un matériau hydrogel de silicone, ou leurs mélanges.

14. Nécessaire selon une quelconque revendication précédente, dans lequel chaque lentille est formée à l'aide d'un processus de pivotement.

15. Nécessaire selon une quelconque revendication précédente, dans lequel le profil d'épaisseur variable de chaque zone périphérique est un prisme-ballast.

16. Nécessaire selon une quelconque revendication précédente, comprenant en outre :
un emballage permettant de délivrer l'ensemble de lentilles de contact à un utilisateur, et
des instructions écrites indiquant une séquence ordonnée pour le port des lentilles, dans lequel facultativement, les instructions écrites sont fournies sur l'emballage ou sur une des lentilles.

17. Procédé de fabrication d'un premier ensemble de lentilles de contact et d'un second ensemble de lentilles de contact destinés à être utilisés dans un nécessaire selon une quelconque revendication précédente, le procédé comprenant :
(a) la formation d'une première lentille de contact pour un premier ensemble de lentilles de contact, dans lequel la lentille inclut une zone optique et une zone périphérique entourant la zone optique, la zone périphérique de chaque lentille ayant un profil d'épaisseur variable qui est configuré pour commander la rotation de la lentille, et la zone optique de chaque lentille comprenant :
une région centrale, la région centrale ayant un premier axe optique et une courbure fournissant une puissance de base ;
une région annulaire, dans lequel la région annulaire entoure circonférentiellement la région centrale, et dans lequel la région annulaire comprend une zone de traitement ayant une caractéristique qui réduit le contraste d'une image qui est formée par une lumière traversant la région centrale et la zone de traitement en comparaison à une image d'un objet qui serait formée par une lumière traversant uniquement la région centrale, la zone de traitement de chaque lentille comprenant au moins l'un des éléments suivants :
(i) une région de puissance d'addition ayant une courbure fournissant une puissance d'addition, dans lequel une lumière provenant de chaque objet ponctuel distant est focalisée par une zone de traitement pour former un arc focalisé au niveau d'une surface focale proximale, l'arc étant à l'extérieur d'un cercle flou formé par la lumière focalisée par la région centrale et s'étendant dans une direction autour de ce cercle flou ; (ii) une particularité qui augmente la diffusion d'une lumière traversant la zone de traitement en comparaison à une lumière traversant uniquement la région centrale ; et
(iii) une caractéristique qui provoque la diffraction d'une lumière traversant la zone de traitement ;
(b) la répétition de l'étape (a) pour former une seconde lentille de contact dans le premier ensemble, dans lequel la zone de traitement est positionnée en rotation, par rapport au profil d'épaisseur de zone périphérique, à un angle différent autour de l'axe optique dans la première lentille et dans la seconde lentille ; et
(c) la répétition des étapes (a) et (b) pour former un second ensemble de lentilles de contact, le second ensemble de lentilles de contact ayant les particularités du premier ensemble de lentilles, dans lequel pour chaque lentille dans le premier ensemble de lentilles ayant une zone de traitement qui est positionnée en rotation, par rapport au profil d'épaisseur de zone périphérique, à un premier angle autour de l'axe optique, il y a une lentille correspondante dans le second ensemble de lentilles qui a une zone de traitement qui est positionnée, par rapport au profil d'épaisseur de zone périphérique, à un angle égal et opposé autour du premier axe optique, et dans lequel le premier ensemble de lentilles de contact est un ensemble de lentilles pour l'œil gauche d'un porteur, et le second ensemble de lentilles est un ensemble de lentilles pour l'œil droit du porteur, ou vice versa.
